# EUROPÄISCHE PATENTSCHRIFT

(11) **EP 0 859 655 B1**
(45) Veröffentlichungstag und Bekanntmachung des Hinweises auf die Patenterteilung: **19.01.2000**
(21) Anmeldenummer: 96928308.4
(22) Anmeldetag: 10.09.1996
(51) Int. Cl.: B01D 19/00, B01D 35/10, C02F 1/20

(54) **WASSERKONDITIONIERUNGSVORRICHTUNG ZUR ENTGASUNG UND/ODER ENTSCHLAMMUNG VON WASSER IN LEITUNGEN**
WATER TREATMENT DEVICE FOR DEGASSING AND/OR DE-SLUDGING WATER IN PIPES
DISPOSITIF DE TRAITEMENT DE L'EAU POUR DEGAZER ET/OU NETTOYER L'EAU CIRCULANT DANS DES CONDUITES

(30) Priorität: 11.09.1995 CH 256895
(43) Veröffentlichungstag der Anmeldung: 26.08.1998
(73) Patentinhaber: Stücklin & Cie AG, 4414 Füllinsdorf (CH)
(72) Erfinder: FRIEDRICH, Helmut, CH-4410 Liestal (CH)
(74) Vertreter: Ullrich, Gerhard, Dr.
(86) Internationale Anmeldenummer: CH9600308
(87) Internationale Veröffentlichungsnummer: WO9710037

(56) Entgegenhaltungen:
- EP-A- 0 280 052
- EP-A- 0 391 484
- CH-A- 589 462
- PATENT ABSTRACTS OF JAPAN vol. 8, no. 41 (C-211) [1478] , 22.Februar 1984 & JP,A,58 202005 (TOUYOU FUIRUTAA KOGYO K.K.)
- PATENT ABSTRACTS OF JAPAN vol. 8, no. 62, 23.März 1984 & JP,A,58 214307 (MITSUBISHI JUKOGYO K.K.), 13.Dezember 1983,

## Beschreibung

### Anwendungsgebiet der Erfindung

Die vorliegende Erfindung bezieht sich auf eine Wasserkonditionierungsvorrichtung zur Entgasung und/oder Entschlammung von Wasser in Leitungen, wie sie im Oberbegriff des unabhängigen Patentanspruchs 1 definiert ist.

Als Entlüfter bekannte Vorrichtungen dieser Art dienen in erster Linie dazu, die vom Wasser in Form von Blasen mitgeführten Gase, insbesondere Luft, in die Aussenluft auszuscheiden, unter anderem um eine Korrodierung der Leitungen zu verhindern. Solche Entlüfter werden insbesondere in Heizungssystemen, Wasserversorgungssystemen und Solaranlagen eingesetzt, wo durch das Erhitzen von Wasser unterschiedlich grosse Gasblasen - auch in Form sogenannter Mikroblasen - gebildet werden. Zur Vereinfachung des Sprachgebrauchs wird im weiteren der Begriff "Luftblasen" verwendet.

### Stand der Technik

In der europäischen Patentanmeldung Nr. 0 391 484 ist eine Wasserkonditionierungsvorrichtung mit erhöhter Luftabscheidungskapazität der eingangs genannten Art beschrieben, die über zwei gegenüberliegende Anschlussstutzen an je eine horizontale Zulauf- und Ablaufleitung angeschlossen werden kann. Diese Wasserkonditionierungsvorrichtung weist einen unteren, zylinderförmigen Gehäuseteil auf, der mit den beiden erwähnten Anschlussstutzen versehen ist und in dem eine Vielzahl von speziellen, Bohlen, zylindrischen Füllelementen als Gas- und Schlammabscheider in der Wasserströmung angeordnet sind. Durch ein im oberen Gehäuseteil angebrachtes, schwimmergesteuertes Entgasungsventil wird das abgeschiedene Gas in die Aussenluft abgeleitet. Der abgeschiedene Schlamm sammelt sich am Boden des unteren Gehäuseteils an und kann über eine Schlammauslassöffnung entfernt werden.

Ein Nachteil dieser Wasserkonditionierungsvorrichtung ist, dass der Gas- und Schlammabscheider aus vielen speziellen Einzelelementen besteht, die auf dem Gehäuseboden aufliegen. Dadurch steht für die Schlammablagerung relativ wenig Raum zur Verfügung und der Schlamm muss entsprechend oft entfernt werden. Ein weiterer Nachteil ist, dass die Anschlussstutzen mit Gittern versehen sein müssen, damit die Füllelemente im Gehäuse gehalten werden. Überdies weisen derartige Vorrichtungen infolge der zufällig angeordneten Ansammlung der Einzelelemente eine undefinierte, d.h. in einer gewissen Bandbreite unterschiedliche Entgasungsleistung, auf.

### Aufgabe der Erfindung

Generell ist die Entgasungsleistung der bisher bekannten Wasserkonditionierungsvorrichtungen unbefriedigend. Angesichts der Nachteile der bis dato existierenden Vorrichtungen, liegt der Erfindung das folgende Problem zugrunde. Zu schaffen ist eine Wasserkonditionierungsvorrichtung, welche im Vergleich zu den herkömmlichen, vergleichbaren Vorrichtungen eine deutlich verbesserte Entgasungsleistung erbringt und bei welcher die erwähnten übrigen Unzulänglichkeiten nicht auftreten. Massgeblich ist ferner, dass die Vorrichtung in verschiedenen Dimensionen voll funktionstüchtig ist und somit universell in verschieden grossen Anlagen mit stark unterschiedlichen Durchflussmengen eingesetzt werden kann. Zudem sollen die Gestehungskosten für die Vorrichtung bei einer langen Lebensdauer möglichst niedrig sein.

### Wesen der Erfindung

Diese Aufgabe wird durch die erfindungsgemässe Wasserkonditionierungsvorrichtung gelöst, wie sie im unabhängigen Patentanspruch 1 definiert ist. Bevorzugte Ausführungsvarianten ergeben sich aus den abhängigen Patentansprüchen 1 bis 12. Die im abhängigen Patentanspruch 13 definierte Ausführungsvariante wird ausschliesslich zur Schlammabscheidung verwendet.

Das Wesen der Erfindung besteht darin, dass in der Wasserkonditionierungsvorrichtung als eigentliches Abscheideorgan zur Gas- und/oder Schlammabscheidung ein wasserdurchlässiges, Bündel aus Borsten, z.B. in Form einer Drahtbürste verschiedener Kontur, oder ein mit Saiten, harfenartig bespannter Rahmen, eingesetzt wird. Eine besonders gute Abscheidungsleistung erzielt man, wenn zumindest ein Grossteil der Borsten bzw. Saiten in der Wasserkonditionierungsvorrichtung im Prinzip senkrecht angeordnet ist, so dass der durchfliessende Wasserstrom auch etwa senkrecht auf die Borsten bzw. Saiten auftrifft. Die Wasserkonditionierungsvorrichtung umfasst ein Gehäuse, das mit zwei Anschlussstutzen zum Anschliessen der Vorrichtung an je eine mindestens annähernd horizontale Zulauf- und Ablaufleitung versehen ist. In diesem Gehäuse sitzt das erfindungsgemässe Abscheideorgan.

Bei einer walzenförmigen Bürste erzielt man beste Ergebnisse, wenn der Bürstenkern mindestens annähernd horizontal in der Wasserströmung angeordnet ist und die nach oben weisenden Borsten länger als die nach unten weisenden Borsten sind. Durch die Masse der Borsten, die sich zum Teil an der Innenwandung des Gehäuses abstützen, bleibt die Bürste im Gehäuse positioniert. Für grössere Wasserkonditionierungsvorrichtungen verwendet man auch pinselförmige Bürsten oder mit Saiten bespannte Abscheiderahmen, wobei der Bürstenteller bzw. die Unterseite des Rahmens dann zweckmässigerweise auf dem Gehäuseboden aufsitzt, so dass sich die Borsten bzw. die gespannten Saiten alle aufwärts in das Gehäuse erstrecken. Als Material für die Borsten bzw. Saiten kommt ein geeigneter, korrosionsbeständiger Draht oder auch adäquater Kunststoff in Betracht.

Mittels eines Entgasungsventils wird das abgeschiedene Gas in die Aussenluft abgeleitet. Für die Benutzung der Wasserkonditionierungsvorrichtung als reiner Entschlammer wird das Entgasungsventil durch einen Hahn für den Schlammauslass ersetzt, so dass die Vorrichtung um 180° gedreht, d.h. mit dem Gehäuseboden nach oben, an die Zulauf- und Ablaufleitung montiert werden kann.

### Zeichnungen und Ausführungsbeispiele

Im folgenden wird die erfindungsgemässe Wasserkonditionierungsvorrichtung unter Bezugnahme auf die beigefügten Zeichnungen und anhand von drei Ausführungsbeispielen detaillierter beschrieben. Im Anschluss an die Ausführungsbeispiele werden noch weitere mögliche Modifikationen erwähnt. Es zeigen:

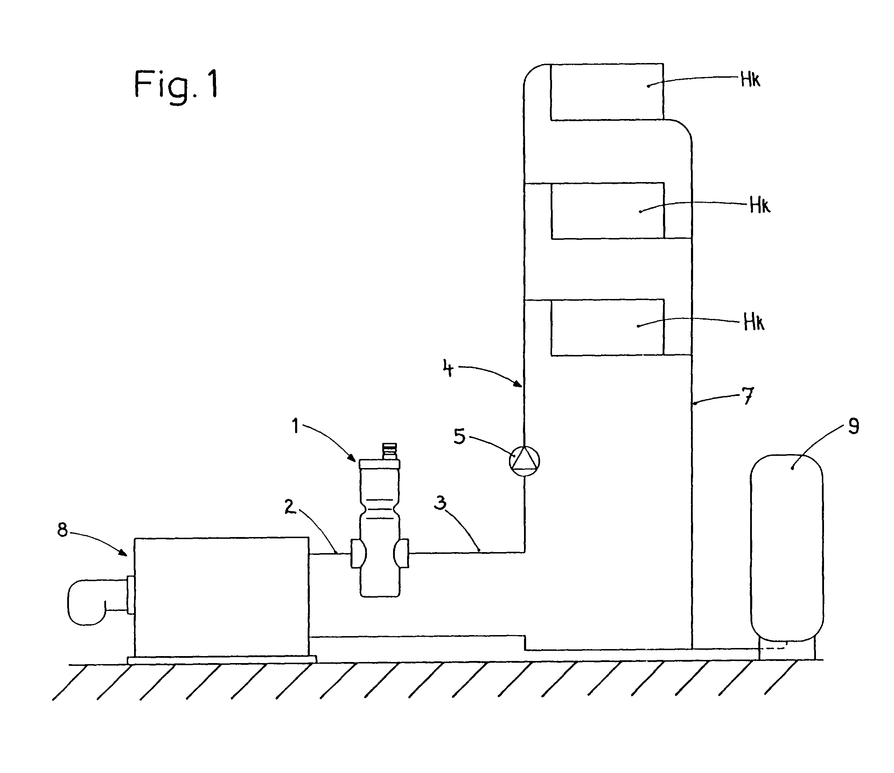

- Figur 1: - ein vollständiges Heizungssystem mit einer Wasserkonditionierungsvorrichtung in schematischer Darstellung;
- Figur 2.0: - die im Vorlauf des Heizungssystems integrierte Wasserkonditionierungsvorrichtung mit einem Abscheideorgan zur Gas- und/oder Schlammabscheidung in Form einer walzenförmigen Bürste (*1. Ausführungsbeispiel*) ;
- Figur 2.1: - die Wasserkonditionierungsvorrichtung mit der walzenförmigen Bürste gemäss Figur 2.0 in Frontansicht;
- Figur 2.2: - die Darstellung gemäss Figur 2.1 in der Seitenansicht;
- Figur 2.3: - die separate walzenförmige Bürste gemäss den Figuren 2.0 bis 2.2 in Frontansicht;
- Figur 3.1: - eine Frontansicht der Wasserkonditionierungsvorrichtung gemäss Figur 2.0 mit einer pinselförmigen Bürste (*2. Ausführungsbeispiel*);
- Figur 3.2: - die Darstellung gemäss Figur 3.1 in der Seitenansicht;
- Figur 3.3: - die separate pinselförmige Bürste gemäss den Figuren 3.1 und 3.2;
- Figur 4.1: - eine Frontansicht der Wasserkonditionierungsvorrichtung gemäss Figur 2.0 mit einem Abscheideorgan zur Gas- und Schlammabscheidung in Form eines bespannten Rahmens (3. *Ausfuhrungsbeispiel*);
- Figur 4.2: - die Darstellung gemäss Figur 4.1 in der Seitenansicht und
- Figur 4.3: - einen separaten, eingliedrigen mit Saiten umspannten Abscheiderahmen gemäss den Figuren 4.1 und 4.2. in der Vorderansicht.

### Figur 1

Die erfindungsgemässen Wasserkonditionierungsvorrichtungen sind u.a. in Heizungssystemen zur Entgasung und/oder Entschlammung von Wasser einsetzbar. Derartige Heizungssysteme können folgendermassen aufgebaut sein. Heizungswasser wird von einem Heizkessel **8** mit Hilfe einer Umwälzpumpe **5** über eine Vorlaufleitung **4** Heizkörpern **Hk** zugeführt und danach über eine Rücklaufleitung **7** wieder zum Heizkessel **8** zurückgeleitet. Ein Ausdehnungsgefäss **9** kommuniziert mit der Rücklaufleitung **7**, um das bei der Erhitzung des Wassers auftretende, zusätzliche Wasservolumen aufzunehmen.

Eine erfindungsgemässe Wasserkonditionierungsvorrichtung **1** ist an eine horizontale Zulaufleitung **2** und eine horizontale Ablaufleitung **3** angeschlossen, die Teil der Vorlaufleitung **4** sind. Vorteilhafterweise ist die Wasserkonditionierungsvorrichtung **1**, wie dargestellt, vor der Umwälzpumpe **5** angeordnet, damit grössere Luftblasen vor der Pumpe aus dem Heizungswasser ausgeschieden werden und keine Schäden verursachen. Die Luftblasen werden so auch nicht zu kleineren Blasen zerquirlt.

Für die gesamte weitere Beschreibung gilt folgende Festlegung: Sind in einer Figur zum Zweck zeichnerischer Eindeutigkeit Bezugsziffern enthalten, aber im unmittelbar dazugehörigen Beschreibungstext nicht erläutert, so wird auf deren Erwähnung in vorangehenden Figurenbeschreibungen Bezug genommen.

### Figur 2.0

Aus der Rücklaufleitung **7** fliesst Wasser in Richtung des Pfeils **B** in die Wasserkammer **81** des Heizkessels **8**. Mit Hilfe des Brenners **82** wird das Wasser erhitzt, wobei durch die Erhitzung die Luftabsorptionsfähigkeit des Wassers abnimmt und sich unterschiedlich grosse Luftblasen **6** bilden. Das die Luftblasen **6** enthaltende Wasser fliesst dann in Richtung des Pfeils **A** in die horizontale Zulaufleitung **2** und von dort in die Wasserkonditionierungsvorrichtung **1**, wo es zur Gas- und Schlammabscheidung auf ein Abscheideorgan **100**, hier in Form einer walzenförmigen Bürste **200**, trifft. Das Wasser strömt durch die Wasserkonditionierungsvorrichtung **1** hindurch - wobei die Luftblasen **6** und eventuell vorhandener Schlamm grösstenteils abgeschieden werden - und dann in die Ablaufleitung **3** hinein. Unter Schlamm wird jeglicher Schmutz, wie zum Beispiel Sand, verstanden, der schwerer als Wasser ist.

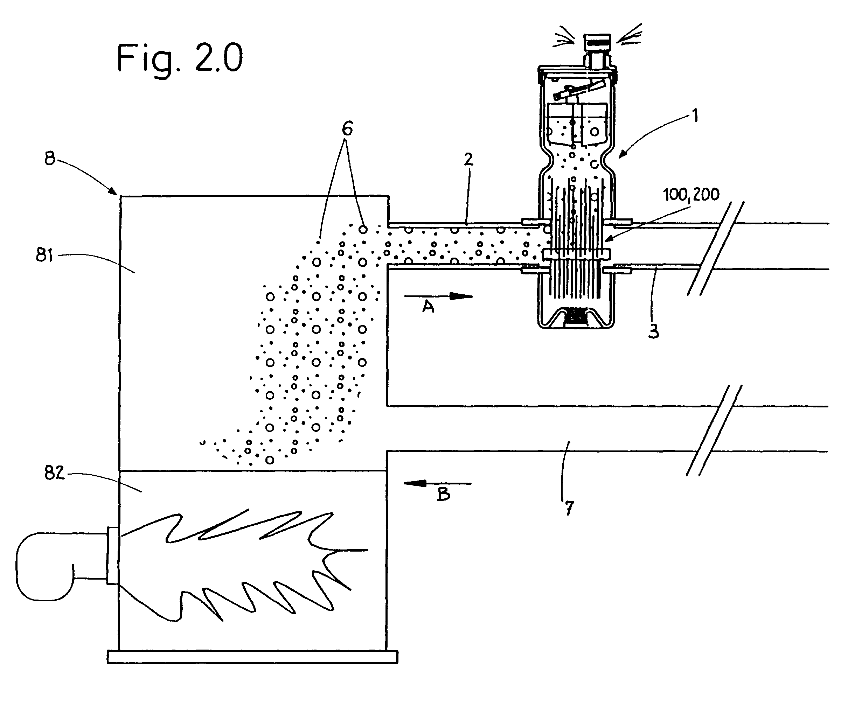

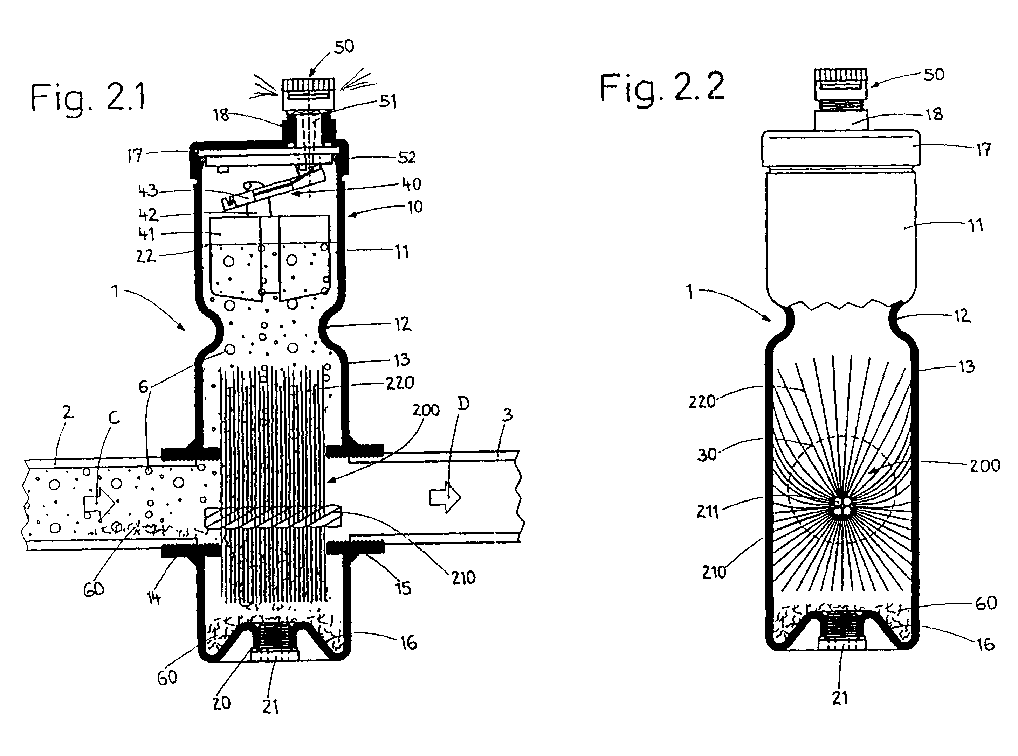

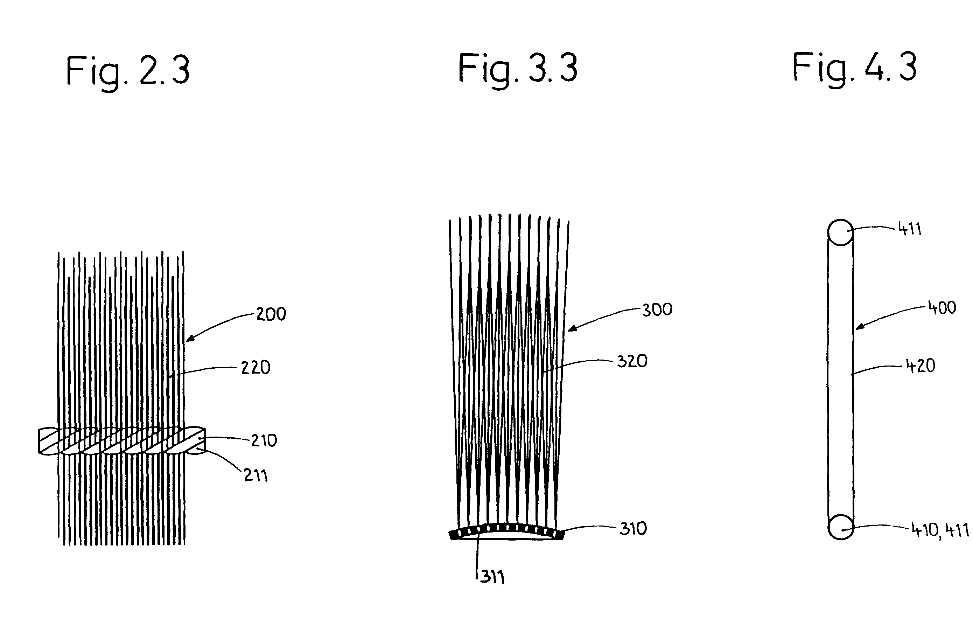

### Figuren 2.1 bis 2.3 (1. Ausführungsbeispiel)

Die Wasserkonditionierungsvorrichtung **1** umfasst ein Gehäuse **10**, das aus einem zylinderförmigen unteren Gehäuseteil **13** und einem zylinderförmigen oberen Gehäuseteil **11** besteht, die über eine halsartige Verengung **12** miteinander verbunden sind. Der obere Gehäuseteil **11** ist mit einem aufgeschraubten Deckel **17** verschlossen. Der untere Gehäuseteil **13** weist einen Gehäuseboden **16** auf, in dessen Mitte eine Schlammauslassöffnung **20** angebracht ist. Diese Öffnung **20** ist mit einem Schraubverschluss **21** verschlossen, der abgenommen werden kann, wenn eine Schlammentfernung notwendig wird. Der Gehäuseboden **16** hat eine allgemein konkave Form, so dass der Schraubverschluss **21** versenkt angeordnet ist, d.h. nicht weiter nach unten ragt als der unterste Punkt des Gehäusebodens **16**. Der untere Gehäuseteil **13** ist ausserdem mit zwei angeschweissten, gegenüberliegenden Anschlussstutzen **14**, **15** zum Anschliessen der Wasserkonditionierungsvorrichtung **1** an die Zulauf- und Ablaufleitung **2** bzw. **3** versehen. Die Anschlussstutzen **14**, **15** besitzen Innengewinde und sind mit der Zulauf- und Ablaufleitung **2** bzw. **3** verschraubt. Als Alternative sind auch Flanschverbindungen vorgesehen.

Als Abscheideorgan dient eine walzenförmige Bürste **200**, die einen sich axial erstrecken, länglichen, aus vier Kerndrähten **211** zusammengedrillten Bürstenkern **210** und sich von diesem nach aussen erstreckende Borsten **220** umfasst. Die in dem Bürstenkern **210** eingeklemmten Borsten **220** ragen strahlenförmig aus diesem heraus. Der Bürstenkern **210** erstreckt sich im Verlauf der direkten Wasserströmung von einem Anschlussstutzen **14** zum anderen Anschlussstutzen **15**. Das von der Zulaufleitung **2** zuströmende, Luftblasen **6** und Schlamm **60** mitführende Wasser (Pfeil C), fliesst zwischen den einzelnen Borsten **220** der Bürste **200** hindurch in die Ablaufleitung **3** und in gereinigtem, blasenarmem Zustand weiter (Pfeil **D**). Die Luftblasen **6** prallen auf die dicht angeordneten Borsten **220**, werden gebremst und wegen ihres zum Wasser relativ geringeren Gewichts nach oben weggeleitet. Mikroblasen neigen dazu, an den Borsten **220** zu haften und quasi an den aufsteigenden Borsten **220** hochzuklettern. Der Schlamm **60** prallt ebenfalls auf die Borsten **220** und fällt wegen des zum Wasser relativ höheren Gewichts nach unten.

Die Borsten **220** sind unterschiedlich lang; die nach oben weisenden Borsten **220** sind länger als die nach unten weisenden Borsten **220**. Eine Vielzahl der kürzeren Borsten **220** ragt in den Bereich des unteren Gehäuseteils **13** hinein, der nicht von der direkten, von einem Anschlussstutzen **14** zum anderen Anschlussstutzen **15** gerichteten Wasserströmung durchflossen wird. In diesem Bereich weist das Wasser eine geringe Geschwindigkeit auf, so dass die Luftblasen **6** langsam nach oben steigen können, und sich am Gehäuseboden **16** abgesetzter Schmutz **60** nicht aufgewirbelt wird. Zahlreiche Borsten **220** stützen sich an der Innenwandung des unteren Gehäuseteils **13** ab, so dass die Bürste **200** sich selbsthaltend im Gehäuse **10** positioniert bleibt.

Damit möglichst viele Luftblasen **6** auf nach oben führende Borsten **220** treffen, ist der Bürstenkern **210** axial, aussermittig zur direkten Wasserströmung, nach unten versetzt angeordnet und die vom Bürstenkern **210** aufwärts weisenden Borsten **220** sind durchschnittlich länger ausgebildet als die sich zur Seite oder nach unten erstreckenden. Zur Illustration ist der äussere Umfang **30** der Anschlussstutzen **14**, **15** gestrichelt eingezeichnet.

Die Dimensionen der Bürste **200** hängen im wesentlichen vom Durchmesser der Zulauf- und der Ablaufleitung **2** bzw. **3** sowie von den Innenmassen des unteren Gehäuseteils **13** ab. Bei grösseren Wasserkonditionierungsvorrichtungen **1** ist es auch möglich, mehrere Bürsten **200** aneinanderzufügen.

Die vom Wasser abgeschiedenen Luftblasen **6** werden über ein schwimmergesteuertes Entgasungsventil **40** der Aussenluft zugeleitet. Dazu ist der Deckel **17** des Gehäuses **10** mit einem Entgasungsstutzen **18** versehen, an dem ein Ventileinsatz **50** angebracht ist. Bei offenem Ventil **40** kann die Luft über eine Entgasungsöffnung **52** und einen Entgasungskanal **51** in die freie Atmosphäre entweichen. Steigt der Wasserspiegel **22** in der Wasserkonditionierungsvorrichtung **1** zu stark an, versperrt ein Schliesskörper **43**, der über einen Übertragungsmechanismus **42** von einem Schwimmer **41** betätigt wird, die Entgasungsöffnung **52**, so dass in das Ventil **40** kein Wasser eindringen kann. In das Gehäuse **10** eingesetzt, wird die Bürste **200** vorzugsweise über die noch zugänglichen Anschlussstutzen **14**, **15**.

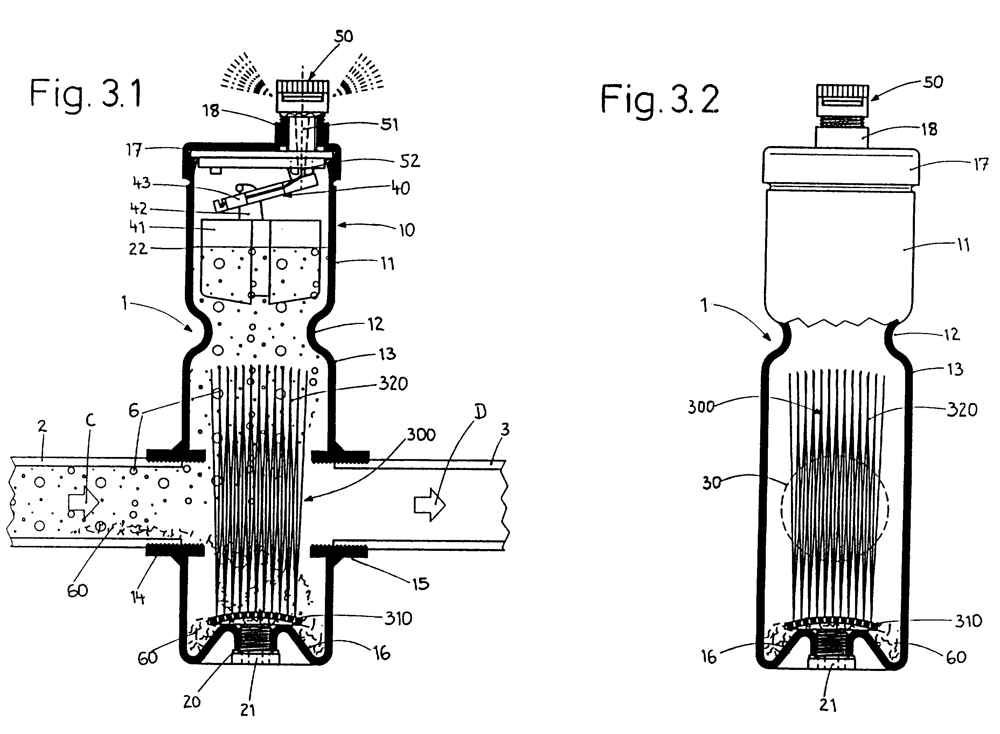

### Figuren 3.1 bis 3.3 (2. Ausführungsbeispiel)

Auch für den Einsatz in grösseren Wasserkonditionierungsvorrichtungen **1** kommt eine pinselförmige Bürste **300** in Betracht, die aus einem Bürstenteller **310** sowie zahlreichen sich darin befestigten und im unteren Gehäuseteil **13** sich empor erstreckenden Borsten **320** besteht. Der Bürstenteller **310** besitzt eine Vielzahl von Löchern **311**, die das Durchsickern von sich absetzendem Schmutz **60** hin zum Gehäuseboden **16** ermöglichen. Für die Stabilität der Bürste **300** im Gehäuse **10** ist es von Vorteil, wenn der Bürstenteller **310** ein grösseres Gewicht aufweist und auch durch seine Dimension fest und direkt auf dem Gehäuseboden **16** aufsitzt. Als besonders günstig hat sich eine bombierte Form für den Bürstenteller **310** erwiesen.

Die Borsten **320** sind auf konventionelle Art im Bürstenteller **310** befestigt. Der Bürstenteller **310** ist auf dem Gehäuseboden **16** aufsitzend, unterhalb der direkten Wasserströmung angeordnet, so dass auch hier die über den Anschlussstutzen **14** einfliessende Strömung gezielt auf das dichte Büschel von Borsten **320** trifft und somit eine gute Abscheideleistung erreicht wird. Diese Bürste **300** wird man bei grösseren Abmessungen von oben in das noch offene Gehäuse **10** einsetzen. Bei entsprechenden Dimensionen können von den pinselförmigen Bürsten **300** ebenfalls mehrere in einem Gehäuse **10** vorgesehen werden.

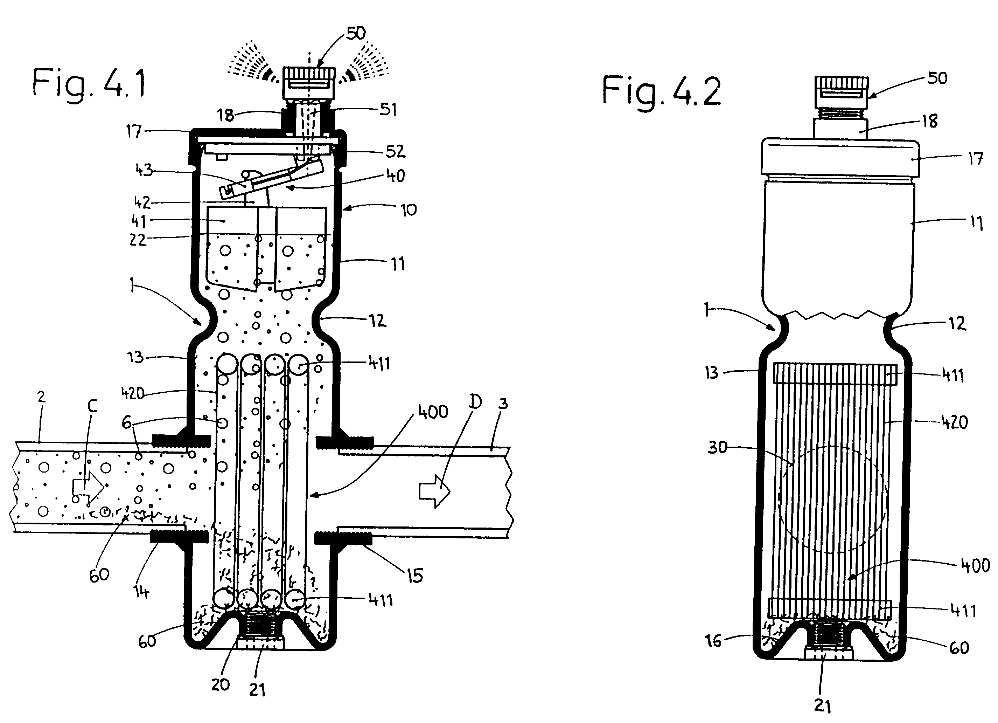

### Figuren 4.1 bis 4.3 (3. Ausführungsbeispiel)

Als Abscheideorgan in grossen Wasserkonditionierungsvorrichtungen 1 dienen vorrangig Abscheiderahmen **400**. Der Abscheiderahmen **400** ist so dimensioniert, dass er einzeln oder im Verbund mit mehreren Abscheiderahmen **400** in das Gehäuse **10** der Wasserkonditionierungsvorrichtung **1**, d.h. in den unteren Gehäuseteil **13** und somit in die direkte Wasserströmung zwischen den beiden Anschlussstutzen **14**, **15** einsetzbar ist.

Ein eingliedriger Abscheiderahmen **400** besteht aus einem Gestell **410**, welches zwei zueinander, etwa parallel geführte Horizontalstangen **411** aufweist, die von hier nicht dargestellten Vertikalstangen beabstandet gehalten werden, sowie aus der harfenartigen Bespannung mit den Saiten **420**. Die Saiten **420** sind aus Draht oder geeignetem Kunststoff.

Besitzen die Horizontalstangen **411** eine rauhe Oberfläche oder ein Aussengewindeprofil, so verschieben sich die um die Horizontalstangen **411** gewickelten und sich zwischen den Horizontalstangen **411** aufspannenden Saiten **420** nicht. Zugleich erhalten die Saiten **420** einen definierten Abstand entsprechend der Gewindezahnung. Es ist von Vorteil, nicht überlange Saitenstücke oder für ein Gestell sogar nur ein Saitenstück zu verwenden, sondern viele kürzere Saitenstücke, die nur eine oder nur wenige Spannweiten ergeben. Sollte während jahrelangen Betriebs ein kurzes Saitenstück reissen, entsteht hierdurch kein grösseres Loch in der Bespannung. Beim Umwickeln der Horizontalstangen **411** mit den Saiten **420** entsteht eine doppelte, zweiseitige Bespannung.

Durch loses Aneinanderreihen oder Zusammenfassen von mehreren eingliedrigen Abscheiderahmen **400** schafft man in der Wasserkonditionierungsvorrichtung 1 ein dichtes, im Prinzip vertikal ausgerichtetes Bespannungsnetz von Saiten **420**, welches von der direkten Wasserströmung durchflossen wird. Die Saiten **420** dienen gleich den Borsten **220** bzw. **320** als Fänger für die Luftblasen **6** und/oder den Schmutz **60**. Die Unterkante des Gestells **410** bzw. die untere Horizontalstange **411** sitzt auf dem Gehäuseboden **16** auf.

Zu der vorbeschriebenen Wasserkonditionierungsvorrichtung sind weitere konstruktive Varianten realisierbar. Hier ausdrücklich erwähnt seien noch:
- Die Form des Gehäuses **10** der Wasserkonditionierungsvorrichtung **1** kann auf vielfältige Weise variieren. Wie in der europäischen Patentanmeldung Nr. 0 391 484 beschrieben, kann der obere Gehäuseteil **11** z.B. kegelförmig ausgebildet sein oder der Gehäuseboden **16** kann eine konvexe Form haben.
- Der Bürstenkern **210** muss nicht aus zusammengedrillten Kerndrähten **211** bestehen; auch andere an sich bekannte Bürstenkerne **210** und Befestigungsarten der Borsten **220** sind für ein Abscheideorgan **100** praktikabel.
- Die Löcher **311** im Bürstenteller **310** sind nicht erforderlich, wenn mit der Wasserkonditionierungsvorrichtung **1** neben der Entgasung keine gleichzeitige Entschlammung nötig ist bzw. wenn der Bürstenteller **310** eine deutlich kleinere Fläche als der Gehäuseboden **16** einnimmt und somit Schmutz **60** auf die verbleibende freie Fläche des Gehäusebodens **16** herabsickern kann.
- Um der Bürste **300** zusätzliche Stabilität im Gehäuse **10** zu geben, wäre es denkbar, eine Anzahl seitlich ausladender Borsten **320** vorzusehen, die sich an der Innenwandung des Gehäuses **10** abstützen.
- Die an den Horizontalstangen **411** durch Umwickeln der Saiten **420** geschaffene Bespannung kann auch mit sonstigen Befestigungstechniken aufgebracht werden.
- In der Regel wird man die Abscheiderahmen **400** so in das Gehäuse **10** einsetzen, dass die Ebene der Saitenbespannung etwa senkrecht zur Wasserströmung ausgerichtet ist. Sind viele Abscheiderahmen **400** zu einem Paket zusammengefasst oder aneinandergereiht und die Abstände zwischen den beiden Bespannungen eines Abscheiderahmens **400** nicht zu gross, kann man das Paket auch so in das Gehäuse **10** einsetzen, dass die Horizontalstangen **411** der Wasserströmung folgen.
- Es sind mehrgliedrige Gestelle **410** denkbar, die es erlauben, darin viele Ebenen von harfenartigen Bespannungen vorzusehen.
- Die Gestelle **410** müssen nicht auf dem Gehäuseboden **16** aufsitzen; sie können auch auf sonstige Weise innerhalb des Gehäuses **10** fixiert werden.
- Anstelle eines schwimmergesteuerten Entgasungsventils **40** kann ein anderes Ventil verwendet werden. Der Ventileinsatz **50** muss nicht unbedingt am Deckel **17** angebracht sein; er kann auch am oberen Gehäuseteil **11** angeordnet werden.

## Patentansprüche

1. Wasserkonditionierungsvorrichtung **(1)** zur Entgasung und/oder Entschlammung von Wasser in Leitungen, mit einem zwei gegenüberliegenden Anschlussstutzen **(14, 15)** zum Anschliessen der Wasserkonditionierungsvorrichtung an je eine mindestens annähernd horizontale Zulauf- und Ablaufleitung **(2, 3)** aufweisenden Gehäuse **(10)**, einem Entgasungsventil **(40)** sowie einem im Gehäuse **(10)** angeordneten Abscheideorgan **(100)** zum Abscheiden von im Wasser enthaltenen Gasblasen **(6)** und/oder Schlamm **(60)**, dadurch gekennzeichnet, dass
a) das Abscheideorgan **(100)** aus mindestens einer walzenförmigen Bürste **(200)** mit Borsten **(220)** oder einer pinselförmigen Bürste **(300)** mit Borsten **(320)** oder einem harfenartig, mit Saiten **(420)** bespannten Abscheiderahmen **(400)** besteht und
b) das Abscheideorgan **(200, 300, 400)** so im Gehäuse **(10)** positioniert ist, dass die direkte, vom Anschlussstutzen **(14)** einfliessende Wasserströmung etwa senkrecht auf eine Vielzahl der Borsten **(220, 320)** bzw. Saiten **(420)** trifft.

2. Wasserkonditionierungsvorrichtung nach Anspruch 1, **dadurch gekennzeichnet**, dass die walzenförmige Bürste **(200)** aus einem länglichen Bürstenkern **(210)** und sich von diesem nach aussen erstreckenden Borsten **(220)** besteht, wobei der Bürstenkern **(210)** mindestens annähernd horizontal in der direkten Wasserströmung zwischen den beiden Anschlussstutzen **(14, 15)** angeordnet ist.

3. Wasserkonditionierungsvorrichtung nach Anspruch 1 oder 2, **dadurch gekennzeichnet**, dass
a) der Bürstenkern **(210)** aussermittig, nämlich unterhalb der axialen Mitte der direkten Wasserströmung, zum Gehäuseboden **(16)** hin versetzt, angeordnet ist und
b) die Bürste **(200)** unterschiedlich lange Borsten **(220)** aufweist, wobei die vom Bürstenkern **(210)** aus sich nach oben erstreckenden Borsten **(220)** durchschnittlich länger sind als die sich zur Seite oder nach unten erstreckenden und
c) die freien Enden der Borsten **(220)** überwiegend in den Bereich des Gehäuses **(10)** hineinragen, der nicht von der von einem Anschlussstutzen **(14)** zum anderen Anschlussstutzen **(15)** gerichteten direkten Wasserströmung durchflossen wird und
d) das Abscheideorgan **(100)** mehrere aneinandergefügte walzenförmige Bürsten **(200)** umfassen kann.

4. Wasserkonditionierungsvorrichtung nach Anspruch 3, **dadurch gekennzeichnet**, dass
a) das Büschel von Borsten **(220)** seitlich von den Anschlussstutzen **(14, 15)** eingeklemmt wird und
b) vom Umfang der Bürste **(200)** sich ein Teil der Enden der Borsten **(220)** an der Innenwandung des unteren Gehäuseteils **(13)** abstützt, wodurch die in das Gehäuse **(10)** eingebrachte Bürste darin positioniert bleibt.

5. Wasserkonditionierungsvorrichtung nach Anspruch 1, **dadurch gekennzeichnet**, dass die Borsten **(220, 320)** bzw. die Saiten **(420)** aus Draht oder aus Kunststoff oder aus beiden Komponenten bestehen.

6. Wasserkonditionierungsvorrichtung nach Anspruch 1, **dadurch gekennzeichnet**, dass
a) das Entgasungsventil **(40)** von einem dem im Gehäuse **(10)** vorhandenen Wasserspiegel **(22)** folgenden Schwimmer **(41)** betätigt wird und
b) das Gehäuse **(10)** einen im Prinzip zylinderförmigen unteren Gehäuseteil **(13)** umfasst, in dem ein oder mehrere Abscheideorgane **(200, 300, 400)** angeordnet sind, wobei sich an den unteren Gehäuseteil **(13)** ein im Prinzip zylinderförmiger, oberer Gehäuseteil **(11)** anschliesst, über den das aus dem Wasser abgeschiedene Gas entweicht und
c) zwischen dem unteren und oberen Gehäuseteil **(13, 11)** eine halsartige Verengung **(12)** vorhanden sein kann.

7. Wasserkonditionierungsvorrichtung nach Anspruch 1, **dadurch gekennzeichnet**, dass
a) das Gehäuse **(10)** oben mit einem Deckel **(17)** verschlossen ist, an dem der Ventileinsatz **(50)** des Entgasungsventils **(40)** angebracht ist und
b) der sich unterhalb der Anschlussstutzen **(14, 15)** befindliche Teil des Gehäuses **(10)** Raum zur Schlammspeicherung bietet und
c) der Gehäuseboden **(16)** eine Schlammauslassöffnung **(20)** aufweist, die mit einem entfernbaren Verschluss **(21)** oder einem Schlammauslasshahn versehen ist.

8. Wasserkonditionierungsvorrichtung nach Anspruch 1, **dadurch gekennzeichnet**, dass die pinselförmige Bürste **(300)** aus einem Bürstenteller **(310)** und einem Bündel daran ansetzender Borsten **(320)** besteht.

9. Wasserkonditionierungsvorrichtung nach Anspruch 8, **dadurch gekennzeichnet**, dass
a) der zum Aufsetzen auf dem Gehäuseboden **(16)** vorgesehene Bürstenteller **(310)** eine bombierte Form aufweist und eine Vielzahl von vertikal durchgehenden Löchern **(311)** besitzt, die ein Durchsickern von sich absetzendem Schlamm **(60)** auf den Gehäuseboden **(16)** erlauben und
b) die Borsten **(320)** überwiegend in den Bereich des unteren Gehäuseteils **(13)** hineinragen, der nicht von der von einem Anschlussstutzen **(14)** zum anderen Anschlussstutzen **(15)** gerichteten, direkten Wasserströmung durchflossen wird und
c) das Abscheideorgan **(100)** mehrere aneinandergefügte pinselförmige Bürsten **(300)** umfassen kann.

10. Wasserkonditionierungsvorrichtung nach Anspruch 1, **dadurch gekennzeichnet**, dass der in den unteren Gehäuseteil **(13)** einzeln oder mehrfach vertikal einsetzbare Abscheiderahmen **(400)** aus einem Gestell **(410)** und der daran angebrachten, harfenartigen Bespannung, die von Saiten **(420)** gebildet wird, besteht.

11. Wasserkonditionierungsvorrichtung nach Anspruch 10, **dadurch gekennzeichnet**, dass
a) der Abscheiderahmen **(400)** auf den Gehäuseboden **(16)** aufsetzbar ist und
b) das Gestell **(410)** mindestens zwei zueinander, etwa parallel verlaufende Horizontalstangen **(411)** aufweist, die von Vertikalstangen beabstandet gehalten werden, wobei sich die Bespannung mit den Saiten **(420)** zwischen den Horizontalstangen **(411)** erstreckt und
c) die Saiten **(420)** überwiegend in den Bereich des unteren Gehäuseteis **(13)** hineinragen, der nicht von der von einem Anschlussstutzen **(14)** zum anderen Anschlussstutzen **(15)** gerichteten, direkten Wasserströmung durchflossen wird und
d) bei Aneinanderreihung von vielen bespannten Gestellen **(410)** sich ein dichtes Feld etwa vertikaler Saiten **(420)** ergibt, das vom zu behandelnden Wasserstrom durchflossen wird.

12. Wasserkonditionierungsvorrichtung nach Anspruch 11, **dadurch gekennzeichnet**, dass
a) die Horizontalstangen **(411)** ein Aussengewindeprofil oder eine adäquate Rillung aufweisen und
b) die Saiten **(420)** um die Horizontalstangen **(411)** geschlungen werden, wodurch sich beiderseits des Gestells **(410)** eine Ebene aus dicht, harfenartig gespannten Saiten **(420)** ergibt und
c) zur Bespannung Saitenstücke der Länge verwendet werden, dass sich pro Saitenstück höchstens ein paar Wicklungen über die zueinander beabstandeten Horizontalstangen **(411)** ergeben und somit die Bespannung eines Gestells **(410)** aus einer Vielzahl von Saitenstücken gebildet wird.

13. Wasserkonditionierungsvorrichtung nach Anspruch 1, **dadurch gekennzeichnet**, dass man anstelle des Entgasungsventils **(40)** einen Hahn für den Schlammauslass vorsieht, so dass sie um 180° gedreht, d.h. mit dem Gehäuseboden **(16)** nach oben, montiert werden kann und als solche allein für die Schlammabscheidung einsetzbar ist.

## Claims

1. Water treatment device (1) for degassifying and/or desludging water in pipelines, comprising a housing (10) having two oppositely situated connecting stubs (14, 15) for connecting the water treatment device to in each case one at least approximately horizontal inflow and outflow pipe (2, 3), a degassification valve (40) and a separator (100), arranged in the housing (10), for separating gas bubbles (6) and/or sludge (60) contained in the water, characterized in that
a) the separator (100) comprises at least one roller-shaped brush (200) with bristles (220), or one paintbrush-shaped brush (300) with bristles (320), or one separator frame (400) in the shape of a harp strung with strings (420), and
b) the separator (200, 300, 400) is positioned in the housing (10) such that the direct water flow flowing in from the connecting stub (14) strikes a multiplicity of the bristles (220, 320) or strings (420) approximately perpendicularly.

2. Water treatment device according to Claim 1, characterized in that the roller-shaped brush (200) comprises an elongated brush core (210) and bristles (220) extending from the latter to the outside, the brush core (210) being arranged at least approximately horizontally in the direct water flow between the two connecting stubs (14, 15).

3. Water treatment device according to Claim 1 or 2, characterized in that
a) the brush core (210) is arranged eccentrically, specifically below the axial middle of the direct water flow, offset towards the housing base (16), and
b) the brush (200) has bristles (220) of different lengths, the bristles (220) extending upwards out of the brush core (210) being longer on average than those extending laterally or downwards, and
c) the free ends of the bristles (220) project predominantly into the region of the housing (10) which is not flowed through by the direct water flow directed from one connecting stub (14) to the other connecting stub (15), and
d) the separator (100) can comprise a plurality of roller-shaped bristles (200) joined together.

4. Water treatment device according to Claim 3, characterized in that
a) the tuft of bristles (220) is clamped laterally by the connecting stubs (14, 15), and
b) from the circumference of the brush (200) a portion of the ends of the bristles (220) is supported on the inner wall of the lower housing part (13), as a result of which the brush inserted into the housing (10) remains positioned therein.

5. Water treatment device according to Claim 1, characterized in that the bristles (220, 320) or the strings (420) consist of wire or of plastic or of both components.

6. Water treatment device according to Claim 1, characterized in that
a) the degassification valve (40) is actuated by a float (41) following the water level (22) present in the housing (10), and
b) the housing (10) comprises an in principle cylindrical lower housing part (13) in which one or more separators (200, 300, 400) are arranged, there adjoining the lower housing part (13) an in principle cylindrical upper housing part (11) via which the gas separated from the water escapes, and
c) a neck-like constriction (12) can be present between the lower and upper housing parts (13, 11).

7. Water treatment device according to Claim 1, characterized in that
a) the housing (10) is sealed on top by a lid (17) to which the valve-seat insert (50) of the degassification valve (40) is fitted, and
b) the part of the housing (10) located below the connecting stubs (14, 15) provides space for storing sludge, and
c) the housing base (16) has a sludge outlet opening (20) which is provided with a removable closure (21) or a sludge outlet cock.

8. Water treatment device according to Claim 1, characterized in that the paintbrush-shaped brush (300) comprises a brush plate (310) and a bundle of bristles (320) attached thereto.

9. Water treatment device according to Claim 8, characterized in that
a) the brush plate (310) provided for mounting on the housing base (16) has a cambered shape and a multiplicity of vertically penetrating holes (311) which permit sludge (60) which is settling to seep onto the housing base (16), and
b) the bristles (320) predominantly project into the region of the lower housing part (13) which is not flowed through by the direct water flow directed from one connecting stub (14) to the other connecting stub (15), and
c) the separator (100) can comprise a plurality of paintbrush-shaped brushes (300) joined together.

10. Water treatment device according to Claim 1, characterized in that the separator frame (400), which can be inserted vertically individually or multiply in the lower housing part (13) comprises a support (410) and the harp-like stringing which is fitted thereon and formed by strings (420).

11. Water treatment device according to Claim 10, characterized in that
a) the separator frame (400) can be mounted on the housing base (16), and
b) the support (410) has at least two horizontal bars (411) which run approximately parallel to one another and are held spaced apart by vertical bars, the stringing with the strings (420) extending between the horizontal bars (411), and
c) the strings (420) predominantly project into the region of the lower housing part (13) which is not flowed through by the direct water flow directed from one connecting stub (14) to the other connecting stub (15), and
d) when many stringed supports (410) are lined up with one another a dense field of approximately vertical strings (420) is formed which is flowed through by the water stream to be treated.

12. Water treatment device according to Claim 11, characterized in that
a) the horizontal bars (411) have an externally threaded profile or an adequate system of grooves, and
b) the strings (420) are wound around the horizontal bars (411), thus producing on both sides of the support (410) a plane made from dense strings (420) strung like a harp, and
c) for the stringing, use is made of pieces of string, the length of which results per piece of string in at most a few windings over the horizontal bars (411) spaced apart from one another, and thus the stringing of a support (410) is formed from a multiplicity of pieces of string.

13. Water treatment device according to Claim 1, characterized in that instead of the degassification valve (40) provision is made of a cock for the sludge outlet, such that it can be mounted rotated by 180°, that is to say with the housing base (16) on top, and can be used, as such, solely for separating the sludge.

## Revendications

1. Dispositif de traitement de l'eau (1) pour dégazer et/ou nettoyer l'eau circulant dans des conduites, avec un boîtier (10) présentant deux tubulures de raccordement (14, 15) pour relier le dispositif de traitement de l'eau respectivement à au moins une conduite d'amenée et une conduite de sortie (2, 3) approximativement horizontales, une soupape de dégazage (40), ainsi qu'un organe de séparation (100) disposé dans le boîtier (10) pour séparer les bulles de gaz (6) et/ou la boue (60) contenues dans l'eau, caractérisé en ce que
a) l'organe de séparation (100) est constitué d'au moins une brosse cylindrique (200) avec des crins (220) ou d'au moins une brosse en forme de pinceau (300) avec des crins (320) ou d'au moins un cadre de séparation (400) recouvert de cordes (420) à la manière d'une harpe et
b) l'organe de séparation (200, 300, 400) est positionné dans le boîtier (10) de telle manière que le courant d'eau direct coulant de la tubulure de raccordement (14) rencontre plus ou moins verticalement une pluralité de crins (220, 320) ou, selon le cas, des cordes (420).

2. Dispositif de traitement de l'eau suivant la revendication 1, caractérisé en ce que la brosse cylindrique (200) est constituée d'un noyau de brosse (210) oblong et de crins (220) s'étendant de celui-ci vers l'extérieur, le noyau de brosse (210) étant disposé au moins approximativement à l'horizontale dans le courant d'eau direct entre les deux tubulures de raccordement (14, 15).

3. Dispositif de traitement de l'eau suivant la revendication 1 ou 2, caractérisé en ce que
a) le noyau de brosse (210) est disposé de manière excentrée, à savoir sous le centre axial du courant d'eau direct, et déplacé vers le fond du boîtier (16), et
b) la brosse (200) présente des crins (220) de longueurs différentes, les crins (220) s'étendant du noyau de brosse (210) vers le haut étant en moyenne plus longs que ceux qui s'étendent latéralement ou vers le bas, et
c) les extrémités libres des crins (220) débordent principalement dans la zone du boîtier (10) qui n'est pas traversée par le flux d'eau direct dirigé d'une tubulure de raccordement (14) vers l'autre tubulure de raccordement (15), et
d) l'organe de séparation (100) peut comprendre plusieurs brosses cylindriques (200) juxtaposées,

4. Dispositif de traitement de l'eau suivant la revendication 3, caractérisé en ce que
a) le faisceau de crins (220) est calé latéralement par les tubulures de raccordement (14, 15), et
b) à la périphérie de la brosse (200), une partie des extrémités des crins (220) s'appuie à la paroi intérieure de la partie inférieure du boîtier (13), la brosse introduite dans le boîtier (10) restant par conséquent positionnée à l'intérieur.

5. Dispositif de traitement de l'eau suivant la revendication 1, caractérisé en ce que les crins (220, 320) ou, selon le cas, les cordes (420) sont constitué(e)s de fil ou de matière synthétique ou de ces deux composants.

6. Dispositif de traitement de l'eau suivant la revendication 1, caractérisé en ce que
a) la soupape de dégazage (40) est actionnée par un flotteur (41) suivant le niveau d'eau (22) présent dans le boîtier (10), et
b) le boîtier (10) comprend une partie inférieure du boîtier (13) en principe cylindrique, dans laquelle sont disposés un ou plusieurs organes de séparation (200, 300, 400), la partie inférieure du boîtier (13) se poursuivant par une partie supérieure du boîtier (11) en principe cylindrique, par laquelle le gaz séparé de l'eau s'échappe, et
c) un rétrécissement en forme de col (12) peut être présent entre les parties inférieure et supérieure du boîtier (13, 11).

7. Dispositif de traitement de l'eau suivant la revendication 1, caractérisé en ce que
a) le boîtier (10) est verrouillé par un couvercle (17) sur lequel le mécanisme de soupape (50) de la soupape de dégazage (40) est installé et
b) la partie du boîtier (10) se trouvant sous les tubulures de raccordement (14, 15) offre de la place pour stocker la boue, et
c) le fond du boîtier (16) présente une ouverture pour l'évacuation de boue (20) qui est pourvue d'une fermeture (21) démontable ou d'un robinet pour l'évacuation de boue.

8. Dispositif de traitement de l'eau suivant la revendication 1, caractérisé en ce que la brosse en forme de pinceau (300) est constituée d'un plateau de brosse (310) et d'un faisceau de crins (320) qui y sont fixés.

9. Dispositif de traitement de l'eau suivant la revendication 8, caractérisé en ce que
a) le plateau de brosse (310) prévu pour être posé sur le fond du boîtier (16) présente une forme bombée et possède une pluralité de trous (311) traversants verticaux qui permettent une filtration de la boue se déposant sur le fond du boîtier (16), et
b) les brosses (320) débordent principalement dans la zone de la partie inférieure du boîtier (13), qui n'est pas traversée par le courant d'eau direct dirigé d'une tubulure de raccordement (14) vers l'autre tubulure de raccordement (15), et
c) l'organe de séparation (100) peut comprendre plusieurs brosses (300) en forme de pinceau juxtaposées.

10. Dispositif de traitement de l'eau suivant la revendication 1, caractérisé en ce que le cadre de séparation (400) qui peut être placé verticalement seul ou avec d'autres dans la partie inférieure du boîtier (13) est constitué d'un support (410) et d'un cordage tendu disposé sur celui-ci à la manière d'une harpe, qui est formé de cordes (420).

11. Dispositif de traitement de l'eau suivant la revendication 10, caractérisé en ce que
a) le cadre de séparation (400) peut être posé sur le fond du boîtier (16), et
b) le support (410) présente au moins deux barres horizontales (411) parallèles l'une à l'autre, qui sont tenues à distance par des barres verticales, le cordage tendu avec les cordes (420) s'étendant entre les barres horizontales (411) et
c) les cordes (420) débordent principalement dans la zone de la partie inférieure du boîtier (13) qui n'est pas traversée par le courant d'eau direct dirigé d'une tubulure de raccordement (14) vers l'autre tubulure de raccordement (15), et
d) la juxtaposition de nombreux supports recouverts (410) donne un champ dense de cordes (420) plus ou moins verticales, qui est traversé par le courant d'eau à traiter.

12. Dispositif de traitement de l'eau suivant la revendication 11, caractérisé en ce que
a) les barres horizontales (411) présentent un profil de filetage extérieur ou une rainure adéquate, et
b) les cordes (420) sont enroulées autour des barres horizontales (411), de sorte qu'un plan de cordes densément tendues à la manière d'une harpe apparaît de part et d'autre du support, et
c) on utilise pour le cordage tendu des morceaux de corde d'une longueur telle que, par morceau de corde, on obtient au plus quelques enroulements autour des barres horizontales (411) distancées l'une de l'autre et que de cette manière, le cordage tendu d'un support (410) est formé d'une pluralité de morceaux de corde.

13. Dispositif de traitement de l'eau suivant la revendication 1, caractérisé en ce que, au lieu de la soupape de dégazage (40), on prévoit un robinet pour l'évacuation de boue, de sorte qu'il peut être monté en étant retourné à 180°C, c'est-à-dire avec le fond du boîtier (16) monté vers le haut et qu'en tant que tel, il ne peut être utilisé que pour l'élimination de boue.
